# EUROPÄISCHE PATENTANMELDUNG

(11) **EP 2 725 562 A1**
(43) Veröffentlichungstag der Anmeldung: **30.04.2014**
(21) Anmeldenummer: 13189879.3
(22) Anmeldetag: 23.10.2013
(51) Int. Cl.: G07G 1/12, B26D 7/27, G06Q 10/08

(54) **Anordnung zur bedarfsgerechten Steuerung einer Aufschnittschneidemaschine**

(30) Priorität: 24.10.2012 AT 504742012
(71) Anmelder: Kuchler, Fritz, 9020 Klagenfurt (AT)
(72) Erfinder: Kuchler, Fritz, 9020 Klagenfurt (AT)
(74) Vertreter: Müllner, Martin

(57) **Zusammenfassung**

Anordnung zur bedarfsgerechten Steuerung einer Aufschnittschneidemaschine (1) mit Verpackungseinrichtung und zur Erfassung und Ergänzung des Vorratsbestandes an verpackter Ware in einer Verkaufstheke (4) umfasst eine Datenverbindung zwischen einer Kassa (6), einem Steuergerät (5) und der Aufschnittschneidemaschine (1). Das Steuergerät (5) enthält einen Speicher (8) und legt dort ein uhrzeitabhängiges Tagesmuster an Umsatz nach Schnittgutsorte und Menge ab. Die Aufschnittschneidemaschine (1) wird vorerst nach dem Tagesmuster aktiviert und liefert dem Steuergerät (5) die Daten der verpackten Aufschnitte, die in der Verkaufstheke (4) angeboten werden. Die Kassa (6) registriert den Ist-Umsatz in der Zeiteinheit. Das Steuergerät (5) vergleicht diesen Umsatz mit den von der Aufschnittschneidemaschine (1) kommenden Daten an Aufschnitten in der Zeiteinheit. Wurde mehr verkauft als aufgeschnitten, dann wird die Aufschnittschneidemaschine (1) weiter aktiviert. Unterschreitet das produkt-und mengenbezogene Kassensignal das Signal von der Aufschnittschneidemaschine, dann wird das Aufschneiden eingestellt und allenfalls kann ein Display einen Rabatt signalisieren. Uhrzeitabhängig leitet das Steuergerät (5) diese Maßnahmen vor Geschäftsschluss ein. Schnittstellen sind zur Überwachung vorgesehen.

## Beschreibung

### Technisches Gebiet

Die Erfindung betrifft eine Anordnung zur bedarfsgerechten Steuerung mindestens einer Aufschnittschneidemaschine, insbesondere mit nachgeschalteter Verpackungseinrichtung, und mit mindestens einer Kassa mit Dateneingang und Datenausgang, wobei eine Datenverbindung zwischen der Kassa und einem Steuergerät zur Erfassung des statistischen Tagesverbrauchs über einen größeren Zeitraum nach Warensorte, Menge und Uhrzeit vorgesehen ist und über das Steuergerät ein Signal der Aufschnittschneidemaschine, zum Beispiel einer Eingabe-und Anzeigevorrichtung an dieser, unter Angabe von Schnittgutsorte und Verpackungsmenge zur Herstellung von Aufschnitten in Verpackungen nach dem statistischen Tagesmuster zuführbar bzw. die Aufschnittschneidemaschine ein- und ausschaltbar ist.

### Stand der Technik

Schneidemaschinen mit Verpackungseinrichtung werden an der Theke unmittelbar vor den Kunden eingesetzt, um frische Ware frisch aufzuschneiden und sichtbar für den Kunden sogleich zu verpacken. Über diese vor Augen geführte Frischegarantie hinaus kann mittels der genannten Schneidemaschinen bedarfsgerecht auch auf Vorrat geschnitten und verpackt werden, um eine Verkaufstheke bzw. Kühlvitrine mit frisch verpackter Ware zur Darbietung und als kurzfristiges Zwischenlager zu bestücken. Die Kunden erkennen den Unterschied zwischen einer industriell hergestellten, über längere Transportwege herbeigeschafften und längerfristig kühl gelagerten Verpackung und der ganz kurzfristig vorbereiteten Verpackung von Ware, die im Stück gleich daneben anzusehen ist. Diese vor Ort vorbereiteten Verpackungen können durch Zwischenlagen in Kammern unterteilt sein, damit der Kunde dann in seinem Kühlschrank nach Entnahme eines ersten Bedarfs einen Vorrat zuhause hat, der weiterhin original verschlossen ist und daher länger frisch bleibt.

Aus der EP 574649 A ist eine Aufschnittschneidemaschine bekannt, die über ein Display verfügt. Durch Berührung (touchscreen) können die verschiedenen Funktionen der Aufschnittschneidemaschine aufgerufen werden. In diesem Sinn können nach Auflegen und Einspannen einer Wurst auf den Schnittgutwagen die Anzahl der zu schneidenden Scheiben und das Ablegemuster (z.B. stapeln, überlappend in Zeilen und Spalten auflegen) vorgewählt werden, sodass der Schneidevorgang, das Ablegen und gegebenenfalls das Verpacken mit einer Folienschweißeinrichtung nach einem Startbefehl selbstständig erfolgen. Von den Kassen oder den Rechenwaagen wird eine Statistik erstellt, die den typischen täglichen Umsatz mit Aufschnitten nach Uhrzeit, Menge und Sorte aufzeigt. Dieser Regelbedarf wird zeitgerecht auf dem Display angezeigt. Sobald das Personal die am Display genannte Schnittgutsorte auf den Schnittgutwagen legt und einspannt, sowie die Starttaste drückt, schneidet die Maschine entsprechend dem statistischen Bedarf nach dem starren Muster, das über lange Zeit, allenfalls auch saisonabhängig, tages- und stundenabhängig erstellt wurde.

### Darstellung der Erfindung

Die Erfindung betrifft diese kurzfristig vorgeschnittene und verpackte Ware, die aufgrund der Erfahrung über die lokalen Gewohnheiten der Kunden möglichst knapp vor dem Verkauf in schon verpackter Form und Menge zur Verfügung gestellt werden soll. Die Erfindung zielt darauf ab, den Bedarf vorausschauend möglichst genau zu decken, bei zusätzlichem Bedarf rasch nachzuschneiden und bei zu großem Vorrat innerhalb einer vorwählbaren Zeiteinheit (zum Beispiel sechs Stunden) kaufmännische Maßnahmen zur Erhöhung des Absatzes zu treffen.

Dies wird bei einer Anordnung der eingangs beschriebenen Art erfindungsgemäß dadurch erreicht, dass zur Erfassung des Vorratsbestandes an geschnittener und verpackter Ware in einer Theke im Steuergerät eine Differenz aus geschnittener Ware und aktuell verkaufter Ware zwischen Kassa und Aufschnittschneidemaschine ermittelbar und bei einem Unterschreiten einer einstellbaren unteren Schwelle im Steuergerät ein Einschaltbefehl zum produkt- und mengenbezogenen Nachschneiden an die Aufschnittschneidemaschine absetzbar bzw. bei Überschreiten einer ein-stellbaren oberen Schwelle für einen maximal zulässigen Lagerbestand in der Theke ein Signal auslösbar, insbesondere ein Preisnachlass an einem Display bei der Theke anzeigbar und ein produktbezogener Rabattsatz von dem Steuergerät an die Kassa vermittelbar ist. Das Tagesmuster kann so ständig entsprechend der tatsächlichen Verkaufslage korrigiert werden, sodass abweichend von den statistischen Zahlen aktuelle und zuverlässige Informationen zur Verfügung stehen. Der Warenumsatz ist wochentagsabhängig, variiert auch nach Jahreszeiten und kann auch beispielsweise durch das Wetter oder andere nicht hochrechenbare Ereignisse bestimmt werden. Die zum Aufbau des aktuellen Tagesmusters notwendigen Daten gehen von der Kassa an einen Rechner mit Datenspeicher, der Teil des Steuergerätes ist. Dieses Steuergerät erhält ferner auch die Daten hinsichtlich der Sorte und Menge der als Vorrat zur Ablage in der Theke oder Kühlvitrine geschnittenen Ware über die Datenleitung von der Schneidemaschine. Das Steuergerät stellt in seinem Rechner in Zeitabschnitten die Anzahl der dem aktualisierten Tagesmuster entsprechenden, vorgeschnittenen und in der Vitrine abgelegten Aufschnitte nach Sorte und Menge dem aktuellen Umsatz gegenüber, woraus sich der momentane Vorratsbestand in der Vitrine ergibt und aktiviert bei Unterschreiten einer im Steuergerät einzustellenden Schwelle die Schneidemaschine bzw. sendet ein Signal an die Anzeigevorrichtung derselben. So kann auf dem Display zur Bedienung der Schneidemaschine der Hinweis angezeigt werden, dass von einer bestimmten Sorte auf Grund erhöhter Nachfrage eine errechnete Menge an Aufschnitt frisch geschnitten und verpackt in die Theke zum Verkauf nachgelegt werden soll. Das Personal legt die entsprechende Wurstsorte bloß auf den Schnittgutwagen, spannt diese ein und startet die Maschine, die der Steuerung gemäß die Vitrine auffüllt. Wird infolge ausbleibender Signale von der Kassa (oder den Kassen) in der Steuerung eine einstellbare Schwelle überschritten also verminderte Nachfrage für eine Sorte festgestellt, dann erfolgt ebenfalls eine Information an die Geschäftsleitung oder das Personal, insbesondere kann selbsttätig ein Rabattsatz zur Absatzförderung für die überschüssigen Vorräte aufgeschnittener Ware in der Vitrine auf einem allgemein sichtbaren Display angezeigt werden. Die Anordnung arbeitet somit auch selbsttätig, sodass das Personal keine Entscheidungen zur Lagerhaltung oder Verkaufsförderung treffen muss. Natürlich kann aber der Geschäftsführer, dessen kaufmännische Schulung vorausgesetzt wird, bei Bedarf eingreifen und verkaufsfördernde Maßnahmen einleiten.

In Weiterbildung der Erfindung ist es zweckmäßig, wenn das Steuergerät in Abhängigkeit von der Uhrzeit ein Schaltsignal an das Display leitet und gleichzeitig ein Signal mit einem Rabattsatz an die Kassa vermittelbar ist. Gegen Geschäftsschluss sollte der für einen Tag bestimmte Lagerbestand gegen null gehen. Dieser Idealsituation kann man auf diese Weise durch Rabatte nahe kommen, auch dann, wenn die untere Schwelle in dem Steuergerät bereits unterschritten ist. Es wird in diesem Fall kein Schneidebefehl an die Schneidemaschine vermittelt, jedoch wie beim Überschreiten der oberen Schwelle ein Signal zum Einleiten verkaufsfördernder Maßnahmen abgesetzt.

Um den Wareneinkauf aufgrund des Umsatzes zu perfektionieren und Besonderheiten im Absatz eines Standortes sowie andere Parameter zentral zu erfassen und zu beurteilen, ist es zweckmäßig, wenn die Differenz aus den Kassensignalen bezüglich verkaufter Ware und den Signalen von der Aufschnittschneidemaschine über geschnittene Sorten und Mengen zu einem oder mehreren Zeitpunkten an einen Zentralcomputer geleitet wird, sodass beispielsweise bei Geschäftsschluss die noch vorhandene vorab geschnittene, unverkaufte Ware feststellbar ist und bzw. oder Verkaufsdaten über Schnittstellen am Steuergerät einem lokalen oder überregionalen Rechner zuführbar sind.

### Kurze Beschreibung der Abbildungen der Zeichnungen

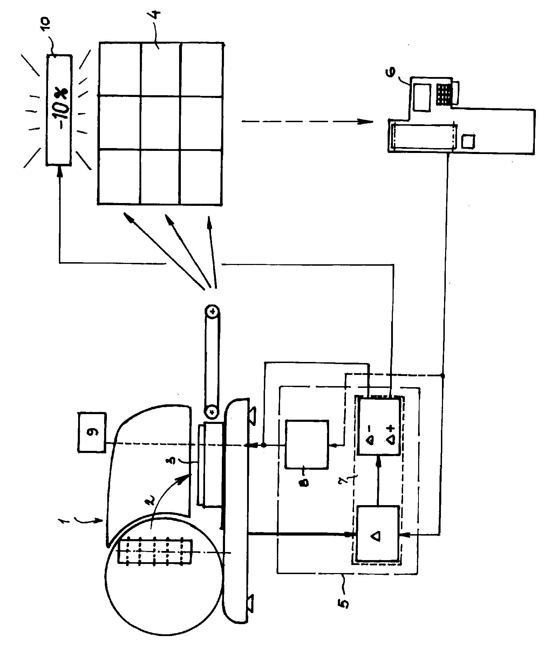

Ein Ausführungsbeispiel einer erfindungsgemäßen Anordnung der einleitend beschriebenen Art ist in der Zeichnung schematisch dargestellt.

### Weg(e) zur Ausführung der Erfindung

Eine Schneidemaschine 1 mit Ablegeeinrichtung 2 und mit einer Schweißeinrichtung 3 zur Herstellung einer Verpackung für den Aufschnitt kann zur unmittelbaren Bedienung der Kunden herangezogen, aber auch zur Versorgung und zum Auffüllen einer Verkaufstheke 4 bzw. Kühlvitrine mit Aufschnitten in Verpackung eingesetzt werden. Die Schneidemaschine 1 ist über ein Steuergerät 5 mit einer modernen Kasse 6 vernetzt, also mit einem Kassenplatz und einem Scanner für die in Rechnung gestellte verkaufte Ware.

Das Steuergerät 5 umfasst einen Rechner 7, der über eine Datenleitung von der Kassa 6 laufend Daten hinsichtlich der verkauften Warensorte und -menge unter Angabe von Tag und Uhrzeit erhält. Der Rechner 7 sortiert den Verkauf, also die von der Kassa 6 kommenden Daten, nach Waren, Mengen und Uhrzeit, sodass sich nach mehreren Tagen ein typisches Tagesmuster an uhrzeitabhängigem Bedarf ergibt. Dieses wird in einem Speicher 8 abgelegt. Je länger der Beobachtungszeitraum ist, desto besser entspricht dieses kunden- und standortabhängige Tagesmuster der Realität.

Das Steuertgerät 5 führt die Schneidemaschine 1 aufgrund des Tagesmusters längs der Zeitlinie eines Tages. Konkret wird auf einem Anzeigefeld 9 an der Schneidemaschine 1 ein Hinweis eingeblendet, welche Warensorte (Wurst, Speck, Schinken, Käse...) und -Menge für den statistisch unmittelbar bevorstehenden Verkauf aufgeschnitten, verpackt und in die Verkaufstheke 4 gelegt werden soll. Natürlich können ein oder mehrere Schneidemaschinen 1 mit Schnittgutzuführung bzw. Schnittgutmagazin auch bedienerlos automatisch eingeschaltet und es kann die Zuführung an die Verkaufstheke 4 über einen Manipulator oder über Förderbänder gezielt durchgeführt werden.

Das System geht davon aus, dass sich der Kunde dem statistischen Tagesmuster entsprechend verhält und somit die in der Verkaufstheke 4 bereitgestellten verpackten Aufschnitte genau nach dem Tagesmuster zur entsprechenden Uhrzeit umgesetzt werden. Natürlich ist dies in der Praxis nicht der Fall. Es kommt zu Regelabweichungen nach oben oder nach unten. Hier registriert also der Rechner 7 innerhalb des Steuergeräts 5 eine Differenz zwischen der in einem Beobachtungszeitraum (zum Beispiel zwei Stunden) aufgeschnittenen Ware und den über die Kassa 6 gemeldeten aktuellen Verkäufen. Wurde das Tagesmuster aus dem Speicher 8 zu einer vorbestimmten Uhrzeit durch die Verkäufe (Kassa 6) übertroffen, dann leert sich die Verkaufstheke rasch. Es ergeht ein Befehl zum Aufschneiden der nachgefragten Sorte an die Schneidemaschine 1. Auf dem Anzeigefeld 9 wird der Bedarf signalisiert und optisch sowie akustisch das Personal zum Auflegen und Einspannen der nachgefragten Sorten auf die Maschine herbeigerufen. Bleibt hingegen das Verkaufsergebnis innerhalb einer Zeitspanne hinter dem statistischen Wert aus dem Tagesmuster zurück, dann befindet sich in der Verkaufstheke 4 zu viel Ware und das Steuergerät 5 schaltet eine Information zum Beispiel an die Geschäftsleitung durch bzw. aktiviert selbsttätig eine Rabattanzeige auf einem Display 10 an der Verkaufstheke 4. Wenn dadurch das Tagesmuster immer noch nicht erreicht wird, kann der Preis nochmals nach unten korrigiert werden.

Ab einem Zeitsignal (zum Beispiel eine Stunde vor Geschäftsschluss) wird die Anzeige 10 jedenfalls aktiviert und ein Nachschneiden von Aufschnitten unterbunden. Ziel ist es, dass die Verkaufstheke bei Geschäftsschluss leer ist. Alle Daten dieser Anordnung können über entsprechende Schnittstellen zum Beispiel per Internet einem Zentralrechner übermittelt werden, der die Einkaufsgewohnheiten der Kunden an den verschiedenen Standorten aufgrund des warenbezogenen Umsatzes vergleicht. Aus den nicht bloß statistischen, sondern effektiven Daten bezüglich des Warenumsatzes und des aufgeschnittenen Vorrats in den Verkaufstheken ergibt sich ein wertvoller Beitrag zu einem zentralen Warenwirtschaftssystem einer Lebensmittelkette. Damit ist die erfindungsgemäße Anordnung zur unmittelbaren Kundenbedienung, zur Bestückung einer Verkaufstheke mit dem Ziel geringstmöglicher Lagerzeiten (Frischegarantie), zur Überwachung des Umsatzes und zum Anschluss an ein externes, konzerneigenes Analysesystem etwa zur Verbesserung des Wareneinkaufs und der Zulieferung bestens geeignet und multifunktionell einsetzbar.

## Patentansprüche

1. Anordnung zur bedarfsgerechten Steuerung mindestens einer Aufschnittschneidemaschine, insbesondere mit nachgeschalteter Verpackungseinrichtung, und mit mindestens einer Kassa mit Dateneingang und Datenausgang, wobei eine Datenverbindung zwischen der Kassa und einem Steuergerät zur Erfassung des statistischen Tagesverbrauchs über einen größeren Zeitraum nach Warensorte, Menge und Uhrzeit vorgesehen ist und über das Steuergerät ein Signal der Aufschnittschneidemaschine, zum Beispiel einer Eingabe- und Anzeigevorrichtung an dieser, unter Angabe von Schnittgutsorte und Verpackungsmenge zur Herstellung von Aufschnitten in Verpackungen nach dem statistischen Tagesmuster zuführbar bzw. die Aufschnittschneidemaschine ein- und ausschaltbar ist, **dadurch gekennzeichnet, dass** zur Erfassung des Vorratsbestandes an geschnittener und verpackter Ware in einer Theke im Steuergerät (5) eine Differenz aus geschnittener Ware und aktuell verkaufter Ware zwischen Kassa (6) und Aufschnittschneidemaschine (1) ermittelbar und bei einem Unterschreiten einer einstellbaren unteren Schwelle im Steuergerät (5) ein Einschaltbefehl zum produkt- und mengenbezogenen Nachschneiden an die Aufschnittschneidemaschine (1) absetzbar bzw. bei Überschreiten einer einstellbaren oberen Schwelle für einen maximal zulässigen Lagerbestand in der Theke (4) ein Signal auslösbar, insbesondere ein Preisnachlass an einem Display (10) bei der Theke (4) anzeigbar und ein produktbezogener Rabattsatz von dem Steuergerät (5) an die Kassa (6) vermittelbar ist.

2. Anordnung nach Anspruch 1, **dadurch gekennzeichnet, dass** das Steuergerät (5) in Abhängigkeit von der Uhrzeit ein Schaltsignal an das Display (10) leitet und gleichzeitig ein Signal mit einem Rabattsatz an die Kassa (6) vermittelbar ist.

3. Anordnung nach Anspruch 1 oder 2, **dadurch gekennzeichnet, dass** die Differenz aus dem Kassensignalen bezüglich verkaufter Ware und den Signalen von der Aufschnittschneidemaschine (1) über geschnittene Sorten und Mengen zu einem oder mehreren Zeitpunkten von dem Steuergerät (5) an einen Zentralcomputer geleitet wird, sodass beispielsweise bei Geschäftsschluss die noch vorhandene vorab geschnittene, unverkaufte Ware feststellbar ist und bzw. oder Verkaufsdaten über Schnittstellen am Steuergerät (5) einem lokalen oder überregionalen Rechner zuführbar sind.
